# EUROPEAN PATENT SPECIFICATION

(11) **EP 3 028 984 B1**
(45) Date of publication and mention of the grant of the patent: **06.11.2019**
(21) Application number: 16152435.0
(22) Date of filing: 25.03.2014
(51) Int. Cl.: B66D 5/04, F16D 49/00, F16D 69/04, F16D 121/20

(54) **OPERATIONAL BRAKE OF AN ELEVATOR, AND AN ELEVATOR**
BETRIEBSBREMSE EINES AUFZUGS SOWIE EIN AUFZUG
FREIN OPÉRATIONNEL D'UN ASCENSEUR ET ASCENSEUR

(30) Priority: 12.04.2013 FI 20135364
(43) Date of publication of application: 08.06.2016
(62) Divisional of application: 14161545.0
(73) Proprietor: KONE Corporation, 00330 Helsinki (FI)
(72) Inventor: VLASOV, Timo, 00330 Helsinki (FI); SAARELAINEN, Antti, 00330 Helsinki (FI); KANTANEN, Kaisa, 00330 Helsinki (FI)
(74) Representative: Glück Kritzenberger Patentanwälte PartGmbB

(56) References cited:
- EP-A- EP2 787 240
- DE-U1-202011 001 482

## Description

### Field of the invention

The invention relates to the field of elevator technology and more particularly to the implementation of operational brakes of elevators.

### Technical background

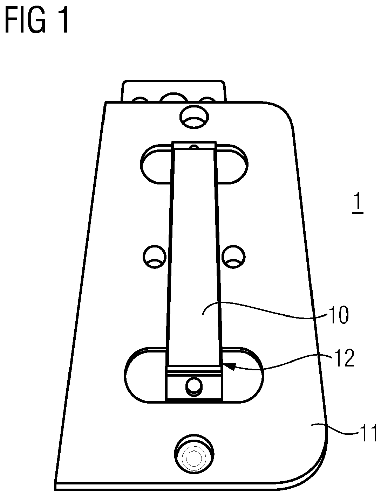

One solution used by the patent applicant in the operational brakes of elevators for fixing a brake shoe is to plant the whole brake shoe 10, according to what is presented in FIG 1, in a pocket 12 in the disc 11 of the operational brake 1.

Cost-effective material for the brake shoes 10 is typically aluminium, which has a different coefficient of thermal expansion than steel, from which the disc 11 of an operational brake 1 is typically fabricated.

The coefficient of thermal expansion of aluminium is approximately twice that of steel. When an operational brake 1 heats up during operation, an aluminium brake shoe 10 is able to expand more than the pocket 12 of a disc 11 that is made of steel. The fixing method used sets high requirements for the tolerances between the brake shoe and the pocket. If the clearance between the pocket in the disc and the brake shoe is too small, the thermal expansion of the aluminium creates significant compressive stress on the brake shoe.

An operational brake according to the preamble of claim 1 is known from DE 20 2011 001 482 U2. EP2787240 is a prior right under Article 54(3)EPC. EP2787240 discloses a brake shoe but does not mention any relation between the coefficient of thermal expansion of the disc and the one of the brake shoe.

### Purpose of the invention

The purpose of the invention is, on the one hand, to enable implementation of an operational brake of an elevator with low tolerance requirements and, on the other hand, to endeavor to prevent malfunctions of the operational brake of the elevator.

This purpose can be resolved with an operational brake according to claim 1 and with an elevator according to claim 9.

The dependent claims describe preferred embodiments of the operational brake and of the elevator.

### Advantages of the invention

The operational brake of an elevator comprises a frame part, a disc of the brake, said disc being arranged at the end of an air gap and being movable with respect to the frame part by means of a guide arm, and a brake shoe fixed to the disc. The brake shoe is supported on the disc by means of a protrusion that is shorter than the brake shoe, which protrusion is arranged in a recess in the disc. This can mean that the thermal expansion occurring in an operating situation of the brake shoe is displaced into the disc primarily from the protrusion at the point of the recess. Owing to this, it is possible to reduce the deformation of the brake shoe caused by the thermal expansion of the brake shoe heating up in operation. In this way it is possible to prevent a malfunction of the brake.

In a preferred embodiment of the invention a guide arm extends into the aforementioned recess in the disc.

The fixing method presented in the section above entitled "Technical background" has been proven to result even in bending of the brake shoe in tests arranged by the patent applicant. Bending of a brake shoe is extremely detrimental from the viewpoint of operation of an operational brake because operational brakes are typically designed to function with a small air gap and bending of the brake shoe reduces the air gap of the operational brake and in the worst case even prevents opening of the operational brake. On the other hand, however, the brake shoe must be fixed sufficiently tightly to the disc. If there is a clearance in the fixing, the tangential force exerted on the brake shoe acts directly on the fixing screws of the brake shoe, which over a long period of time can result in breakage of the fixing screws. Since breaking of the fixing screws can be avoided better, one advantage of the operational brake according to the invention is the safer fixing of the brake shoe to the disc of the operational brake.

The design of the fixing of the brake shoe and disc, and the correct clearance to be used in it, is therefore very challenging, because the operational brakes of elevators function at different temperatures and the clearance is almost
impossible to measure reliably without three-dimensional measuring devices e.g. in assembly. Three-dimensional measuring of each brake component, on the other hand, increases costs in the manufacture of operational brakes of elevators.

The aforementioned reasons have forced the manufacturers of operational brakes to shift to using steel brake shoes, so that thermal expansion differences can be eliminated. A steel brake shoe is, however, significantly more expensive in its costs than e.g. a brake shoe fabricated from aluminium. According to one aspect of the invention, the brake shoe of an operational brake has a larger coefficient of thermal expansion compared to the disc. It is particularly advantageous that a brake shoe can be, or can contain, aluminium and that the disc can be, or can contain, aluminium. An aluminium brake shoe enables the use of essentially cheaper manufacturing methods, e.g. aluminium die casting.

Thus the operational brake according to the invention enables the use of serial production methods, such as die casting, which are cheaper in terms of their costs, in the manufacture of a brake shoe.

If the recess is rotationally symmetrical, more particularly if it is implemented as a bore, the probability of operating malfunctions caused by position errors occurring in the installation phase can be reduced.

When the protrusion is the same piece as the holder of the brake shoe, interferences in the conducting of heat can be avoided better, at least insofar as such interferences are caused by the material interface. This enables more effective cooling of a brake shoe.

When a groove is arranged around the protrusion, the deformation of the disc caused by heating of the brake shoe holder that is outside the protrusion can be prevented more effectively.

When the brake shoe comprises at least one fixing lug, it is possible to implement the brake shoe at the point of the disc fixing in a way that reduces the deformation of the disc caused by heat transferring into the disc via the fixing. Preferably there are two fixing lugs, in which case rotation of the brake shoe around a fixing lug can be avoided better, in which case the brake shoe remains in its installation position better.

The fixing lugs are the same piece as the brake shoe holder. In this way interference in conducting heat possibly caused by material interfaces can be avoided better.

Since the disc comprises a groove that is wider than the brake shoe, on the inside of which groove against one of the two edges the holder of the brake shoe is installed, deformation of the disc caused by a change in the width of the brake shoe caused by thermal expansion can be avoided better. In this way it is possible to better prevent malfunctions of the operational brake. If the recess is made at the point of the groove to deeper than the base of the groove, the shape of the brake shoe can be kept simpler because it does not necessarily need to comprise parts extending to outside the groove in the lateral direction. There is then less need for abundant machining of the disc because just a straight groove needs to be machined for the brake shoe. On the other hand, in this way tolerance-based fatigue of the fixing of the brake shoe caused by tangential forces can be avoided.

Preferably the brake shoe comprises a friction surface installed on the end of the holder. Preferably the friction surface is attached to the brake shoe holder by glueing. When the friction surface wears, the whole brake or brake shoe is replaced.

According to a second aspect of the invention, the operational brake of an elevator is implemented by using an operational brake according to the first aspect of the invention in such a way that the operational brake is normally closed and configured to open when the magnetizing coil of the electromagnet in the operational brake is energized.

### List of drawings

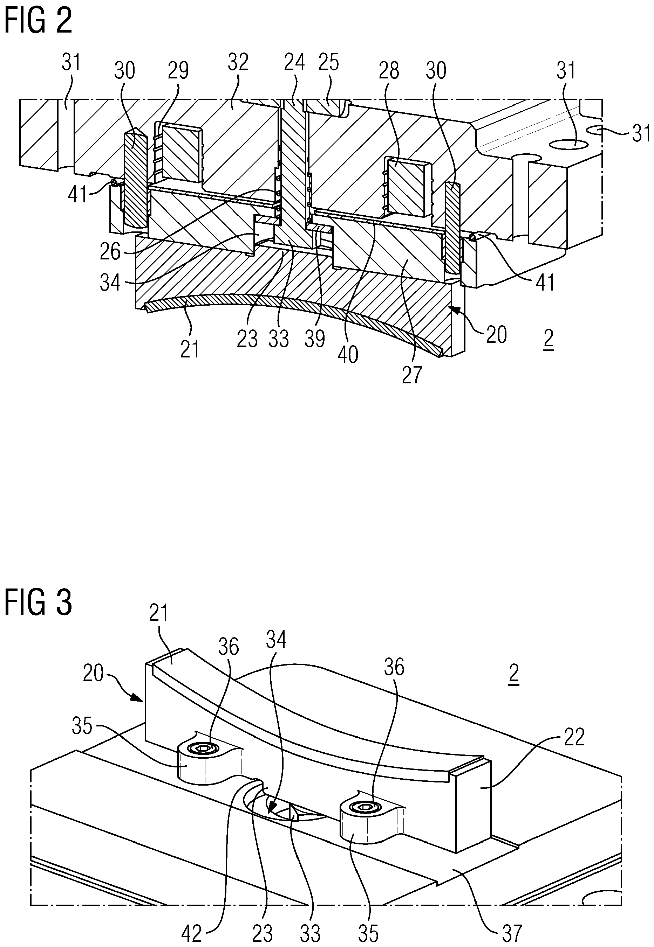

In the following the operational brake of an elevator and the elevator will be presented in more detail with the aid of the embodiment in the drawings FIG 2 and 3 below. Of the drawings:
- FIG 1: presents a part of an operational brake of an elevator according to the state of the art;
- Fig. 2: presents a cross-section of an operational brake of an elevator according to the invention; and
- FIG 3: presents the operational brake of an elevator presented in FIG 2 as viewed from below.

The same reference numbers refer to the same parts in all the FIGs.

### Detailed description

FIG 2 presents an operational brake 2 of an elevator. The operational brake 2 is used e.g. to brake the rotating traction sheave of the hoisting machine of an elevator for stopping the elevator.

The operational brake 2 comprises a frame part 32, which is fastened to a fixed structure, usually to the stationary frame part of the hoisting machine of the elevator, e.g. via fixing holes 31. In addition, the operational brake 2 comprises a brake shoe 20 that is movable with respect to the frame part 32. The brake shoe 20 comprises a holder 22 and a friction surface 21.

The brake shoe 20 is fixed to the disc 27 of the operational brake. Most preferably the fixing is implemented by using fixing bolts 36 (compare FIG 3) to be installed via the fixing lugs.

The disc 27 rests movably on the frame part 32 by means of a guide arm 24.

There is a manual opening 25 (an opening lever) of the spring at the top end of the guide arm 24. The task of the guide arm is to transmit manual opening force from the manual opening lever to the disc 27, with which manual opening is implemented if for some reason it is not possible to use the electromagnet (e.g. owing to an electricity outage). The brake shoe 20 does not attach to the guide arm 24.

The brake shoe 20 is supported on the disc 27 by means of a protrusion 23 that is shorter than the brake shoe 20. The protrusion 23 is in a recess 34 that is most preferably implemented as a bore. The expansion 33 of the guide arm extends into the recess 34. At the point of the guide arm fixing, the brake shoe 20 is supported in the disc 27 via the protrusion 23 and the recess 34 in the disc in such a way that the thermal expansion occurring in an operating situation of the brake shoe 20 is displaced into the disc 27 primarily from the protrusion 23 at the point of the recess 34.

The operational brake 2 also comprises a magnetizing coil 28 of the electromagnet. The magnetizing coil 28 of the electromagnet is disposed in a recess made in the frame part 32. The edges 29 of the recess are most preferably grooved so that any casting resin possibly used attaches better to the edges of the winding groove, in which case the magnetizing coil 28 stays more surely in its recess.

The closing spring of the operational brake 2, said spring being omitted from the drawing FIG 2 for the sake of clarity, keeps the operational brake 2 closed, i.e. it presses the brake shoe 20 and the disc 27 farther from the frame part 32 when the magnetizing coil 28 of the electromagnet is not energized.

When the magnetizing coil 28 of the electromagnet is energized, the force of the electromagnet exceeds the force of the closing spring, in which case the brake shoe 20 and the disc 27 move closer to the frame part 32, in which case the operational brake opens.

From the viewpoint of the operation of the electromagnet, it is essential that the frame part 32 is a magnetically conductive material and that the disc 27 is a magnetically conductive material. An air gap must be kept between the frame part 32 and the disc 27.

A damper 40 can be disposed in the air gap, for which preferably a part made from spring steel is used. The damper 40 can be planar. When the shape between the disc 27 and the frame part 32 is e.g. convex, concave or e.g. a bendable tooth profile, the opening of the operational brake 2 causes deformation (e.g. waviness) of the damper 40. The deformation reduces the sound heard from opening of the operational brake and thus reduces the noise created by the elevator.

Movement of the disc 27 in relation to the frame part 32 is guided most preferably by using guide pins 30. By means of the guide pins 30, rocking in the lateral direction can be reduced.

The air gap of the operational brake 2 can be closed with a seal 41 for ensuring operation of the operational brake 2. In this way dirt generally, and more particularly dirt produced by wearing of the brake shoe 20, does not get into the air gap.

By means of a spacer shim 39, the positioning spring 26 of the guide arm can be kept in its position. By means of the positioning spring, rocking of the guide arm 24 in the lateral direction can be reduced. The task of the positioning spring 26 is to press the guide arm 24 (center bolt) downwards and prevent it from rocking (rocking could cause excess noise). When the guide arm 24 is continuously pressed downwards it also presses the opening handle on top of the brake 2 downwards (as well as the rollers under the opening handle) and thus prevents rocking of the opening handle also.

In other words, the fixing of the brake shoe 20 to the guide arm 24 is implemented in such a way that the protrusion 23 under the brake shoe 20 is sunk into the recess 34 in the center of the disc 27 of the operational brake. Since the thermal expansion is directly proportional to the length of the piece, the solution presented enables a shorter length of the point of connection compared to if the brake shoe 20 were supported for its whole length in a pocket in the disc 27 (as when using the solution according to FIG 1). When the support length is shorter in this way, the protrusion 23 and the recess 34 fit to be tight with respect to each other when thermal expansion once remains smaller, and the thermal stresses caused by it are not able to increase to be significantly large. When the brake shoe 20 is supported for a shorter length, neither the brake shoe 20 nor the brake shoe 20 of the operational brake are able to bend as a consequence of thermal stress. The fixing method thus enables e.g. also the use of aluminium or even plastic as a material of the brake shoe 20.

### List of reference numbers used:

- 1: operational brake
- 2: operational brake
- 10: brake shoe
- 11: disc of brake
- 12: pocket of disc
- 20: brake shoe
- 21: friction surface
- 22: brake shoe holder
- 23: protrusion
- 24: guide arm
- 25: fixing/adjustment part
- 26: positioning spring of guide arm
- 27: disc of operational brake
- 28: magnetizing coil of electromagnet
- 29: edges of recess
- 30: guide pin
- 31: fixing hole
- 32: frame part
- 33: widening
- 34: recess
- 35: fixing lug
- 36: fixing bolt
- 37: groove
- 39: spacer shim
- 40: damper
- 41: seal
- 42: groove

## Claims

1. Operational brake (2) of an elevator, which comprises a frame part (32), a disc (27) of the brake, said disc being arranged at the end of an air gap and being movable with respect to the frame part (32) by means of a guide arm (24), and a brake shoe (20) fixed to the disc (27), wherein the brake shoe (20) is supported on the disc (27) by means of a protrusion (23) that is shorter than the brake shoe (20), which protrusion is arranged in a recess (34) in the disc (27), **characterized in that** the brake shoe (20) comprises at least one fixing lug (35), that the at least one fixing lug (35) is the same piece as the holder (22) of the brake shoe (20), and that the brake shoe (20) has a larger coefficient of thermal expansion compared to the disc (27).

2. Operational brake (2) according to claim 1, wherein the recess (34) is rotationally symmetrical, more particularly a bore.

3. Operational brake (2) according to claim 1 or 2, wherein the protrusion (23) is the same piece as the holder (22) of the brake shoe (20).

4. Operational brake (2) according to claim 3, wherein a groove (42) is arranged around the protrusion (23).

5. Operational brake (2) according to any of the preceding claims, wherein there are two fixing lugs (35).

6. Operational brake (2) according to any of the preceding claims, wherein the disc (27) comprises a groove (37) wider than the brake shoe (20), on the inside of which groove against one of the two edges the holder (22) of the brake shoe (20) is installed.

7. Operational brake (2) according to claim 6, wherein a recess (34) is made at the point of the groove (37) to deeper than the base of said groove.

8. Operational brake (2) according to any of the preceding claims, wherein the brake shoe (20) comprises a friction surface (21) installed on the end of the holder (22).

9. Elevator, the operational brake of which is implemented by using an operational brake (2) according to any of claims 1 - 8 in such a way that the operational brake (2) is normally closed and is configured to open when the magnetizing coil (28) of the electromagnet in the operational brake (2) is energized.

## Patentansprüche

1. Betriebsbremse (2) eines Aufzugs, die ein Rahmenteil (32), eine Bremsscheibe (27), welche an dem Ende eines Luftspalts angeordnet ist und mittels eines Führungsarms (24) relativ zum Rahmenteil (32) bewegbar ist, und einen Bremsschuh (20) aufweist, der mit der Scheibe (27) verbunden ist, wobei der Bremsschuh (20) auf der Scheibe (27) mittels eines Vorsprungs (23) gehalten ist, welcher kürzer als der Bremsschuh (20) ist, welcher Vorsprung in einer Ausnehmung (34) in der Scheibe (27) angeordnet ist, **dadurch gekennzeichnet, dass** der Bremsschuh (20) wenigstens eine Befestigungslasche (35) aufweist, dass die wenigstens eine Befestigungslasche (35) aus dem gleichen Stück besteht wie der Halter (22) des Bremsschuhs (20), und dass der Bremsschuh (20) einen größeren thermischen Expansionskoeffizienten als die Scheibe (27) aufweist.

2. Betriebsbremse (2) nach Anspruch 1, in welcher die Ausnehmung (34) rotationssymmetrisch ist, insbesondere eine Bohrung ist.

3. Betriebsbremse (2) nach Anspruch 1 oder 2, in welcher der Vorsprung (23) aus dem gleichen Stück besteht wie der Halter (22) des Bremsschuhs (20).

4. Betriebsbremse (2) nach Anspruch 3, in welcher eine Nut (42) um den Vorsprung (23) herum angeordnet ist.

5. Betriebsbremse (2) nach einem der vorhergehenden Ansprüche, in welcher zwei Befestigungslaschen (35) vorgesehen sind.

6. Betriebsbremse (2) nach einem der vorhergehenden Ansprüche, in welcher die Scheibe (27) eine Nut (37) aufweist, die breiter ist als der Bremsschuh (20), wobei auf der Innenseite der Nut gegen eine der beiden Kanten der Halter (22) des Bremsschuhs (20) installiert ist.

7. Betriebsbremse (2) nach Anspruch 6, in welcher eine Ausnehmung (34) an dem Punkt der Nut (37) tiefer gemacht ist als die Basis der Nut.

8. Betriebsbremse (2) nach einem der vorhergehenden Ansprüche, in welcher der Bremsschuh (20) eine Friktionsfläche (21) aufweist, die an dem Ende des Halters (22) installiert ist.

9. Aufzug, dessen Betriebsbremse implementiert ist unter Verwendung einer Betriebsbremse (2) nach einem der Ansprüche 1 - 8 in der Weise, dass die Betriebsbremse (2) normalerweise geschlossen ist und konzipiert ist zu öffnen, wenn die Magnetisierungsspule (28) des Elektromagneten in der Betriebsbremse (2) mit Strom gespeist wird.

## Revendications

1. Frein de service (2) d'un ascenseur, lequel comprend une partie de bâti (32), un disque (27) du frein, ledit disque étant agencé à l'extrémité d'un entrefer et étant mobile par rapport à la partie de bâti (32) à l'aide d'un bras de guidage (24), et un segment de frein (20) fixé au disque (27), dans lequel le segment de frein (20) est supporté sur le disque (27) à l'aide d'une saillie (23) qui est plus courte que le segment de frein (20), laquelle saillie est agencée dans un évidement (34) dans le disque (27), **caractérisé en ce que** le segment de frein (20) comprend au moins un ergot de fixation (35), **en ce que** l'au moins un ergot de fixation (35) est la même pièce que le support (22) du segment de frein (20), et **en ce que** le segment de frein (20) présente un coefficient de dilatation thermique plus grand par rapport au disque (27).

2. Frein de service (2) selon la revendication 1, dans lequel l'évidement (34) est symétrique en rotation, plus particulièrement un alésage.

3. Frein de service (2) selon la revendication 1 ou 2, dans lequel la saillie (23) est la même pièce que le support (22) du segment de frein (20).

4. Frein de service (2) selon la revendication 3, dans lequel une rainure (42) est agencée autour de la saillie (23).

5. Frein de service (2) selon une quelconque des revendications précédentes, dans lequel il y a deux ergots de fixation (35).

6. Frein de service (2) selon une quelconque des revendications précédentes, dans lequel le disque (27) comprend une rainure (37) plus large que le segment de frein (20), à l'intérieur de laquelle rainure contre l'un des deux bords le support (22) du segment de frein (20) est installé.

7. Frein de service (2) selon la revendication 6, dans lequel un évidement (34) est réalisé au niveau de la rainure (37) de manière plus profonde que la base de ladite rainure.

8. Frein de service (2) selon une quelconque des revendications précédentes, dans lequel le segment de frein (20) comprend une surface de frottement (21) installée sur l'extrémité du support (22).

9. Ascenseur, dont le frein de service est mis en œuvre en utilisant un frein de service (2) selon une quelconque des revendications 1 à 8 de telle sorte que le frein de service (2) est normalement fermé et est configuré pour s'ouvrir lorsque la bobine magnétisante (28) de l'électroaimant dans le frein de service (2) est mise sous tension.
